(19)

Europäisches
Patentamt
European
Patent Office
Office européen
des brevets

(11) **EP 4 243 144 A1**

(12) **EUROPEAN PATENT APPLICATION**
published in accordance with Art. 153(4) EPC

(43) Date of publication:
**13.09.2023 Bulletin 2023/37**

(21) Application number: **21965849.9**

(22) Date of filing: **23.12.2021**

(51) International Patent Classification (IPC):
***H01M 10/0525*** (2010.01)

(52) Cooperative Patent Classification (CPC):
**H01M 10/0525; Y02E 60/10**

(86) International application number:
**PCT/CN2021/140679**

(87) International publication number:
**WO 2023/115431 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde City, Fujian 352100 (CN)**

(72) Inventors:
• **HUANG, Yuping
Ningde City, Fujian 352100 (CN)**
• **LIN, Mingfeng
Ningde City, Fujian 352100 (CN)**

• **MA, Yunjian
Ningde City, Fujian 352100 (CN)**
• **ZHEN, Xiaofeng
Ningde City, Fujian 352100 (CN)**
• **HU, Yang
Ningde City, Fujian 352100 (CN)**
• **ZHAO, Haikun
Ningde City, Fujian 352100 (CN)**
• **MA, Yalin
Ningde City, Fujian 352100 (CN)**
• **TONG, Xing
Ningde City, Fujian 352100 (CN)**

(74) Representative: **Holt, Lucy Rose et al
Maucher Jenkins
Seventh Floor Offices
Artillery House
11-19 Artillery Row
London SW1P 1RT (GB)**

(54) **SECONDARY BATTERY**

(57) This application provides a secondary battery, including a negative electrode plate and an electrolyte, where the negative electrode plate includes a negative electrode current collector and a negative electrode active substance layer, a first metal oxide layer, and a second metal ion adsorption layer that are sequentially arranged on at least one surface of the negative electrode current collector; the first metal oxide is selected from at least one of manganese dioxide, molybdenum oxide, magnesium oxide, aluminum oxide, and phosphorus pentoxide; and the electrolyte contains second metal ions. In the secondary battery provided in this application, the first metal oxide layer is provided on the negative electrode plate, and the second metal ion adsorption layer is formed on a negative electrode to serve as a protective layer, thereby inhibiting decomposition of electrolytes and improving cycling performance and rate performance of battery cells.

FIG. 1

EP 4 243 144 A1

## Description

### TECHNICAL FIELD

The present invention relates to the field of batteries, and in particular, to a secondary battery, a battery module, a battery pack, and an electric apparatus.

### BACKGROUND

In recent years, with increasingly wide application of secondary batteries, secondary batteries are widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Along with the great development of secondary batteries, higher requirements are imposed on their cycling performance, rate performance, and the like.

### SUMMARY

This application has been made in view of the foregoing issues to provide secondary batteries having good cycling performance and rate performance.

To achieve the above objective, this application provides the following secondary battery, and a battery module including the secondary battery, a battery pack including the battery module, and an electric apparatus.

A first aspect of this application provides a secondary battery, including a negative electrode plate and an electrolyte, where the negative electrode plate includes a negative electrode current collector and a negative electrode active substance layer, a first metal oxide layer, and a second metal ion adsorption layer that are sequentially arranged on at least one surface of the negative electrode current collector; the first metal oxide is selected from at least one of manganese dioxide, molybdenum oxide, magnesium oxide, aluminum oxide, and phosphorus pentoxide, and optionally, manganese dioxide; and the electrolyte contains second metal ions.

Therefore, the first metal oxide layer is disposed on a surface of the negative electrode active substance layer in this application, so that under the strong effect of metal ion adsorption of the first metal oxide layer, the second metal ions are attached to a surface of a negative electrode to form a natural protective layer, which prevents further reduction of electrolytes and co-insertion to make SEI films thinner and more compact, thereby improving cycling performance and rate performance.

In any embodiment, ionic radius of the second metal ion is less than or equal to 0.92 nm.

With an upper limit of the ionic radius of the second metal ion set to the above value, the second metal ions can be easily attached to the surface of the negative electrode to serve as a protective layer.

In any embodiment, the second metal ions are selected from at least one of $Li^+$, $Cr^{3+}$, $Ca^{2+}$, $K^+$, $Na^+$, $Mo^{6+}$, and $Fe^{2+}$, and optionally, at least one of $Li^+$, $Cr^{3+}$, $Mo^{6+}$, and $Fe^{2+}$.

Being the above metal ions, the second metal ions can be easily attached to the surface of the negative electrode to form a natural protective layer, which prevents infiltration, reduction and decomposition of electrolytes, and forming of thick SEI films, and prevents poor battery performance caused by consumption of ions in electrolytes. Being $Li^+$, $Cr^{3+}$, $Ca^{2+}$, $K^+$, $Na^+$, $Mo^{6+}$, and $Fe^{2+}$ with a small ionic radius, the second metal ions can be more easily attached to the surface of the negative electrode to be a better protective layer.

In any embodiment, thickness of the first metal oxide layer is 0.1 nm-10 nm, and optionally, 0.5 nm-5 nm, 0.7 nm-3 nm, or 0.9 nm-1.5 nm.

When the thickness of the first metal oxide layer falls within the above range, lithium ions are allowed to migrate, and the second metal ions can be adsorbed.

In any embodiment, the second metal ions are provided by at least one salt selected from LiCl, $CrCl_3$, CaClz, KCl, NaCl, $MoCl_6$, and FeClz.

Using the above salts to provide the second metal ions can reduce production costs without causing damage to electrodes.

In any embodiment, concentration of the second metal ions in the electrolyte is less than 0.1 mol/L, and optionally, less than 0.05 mol/L, less than 0.01 mol/L, and 0.001 mol/L-0.01 mol/L.

Under the above concentration, the second metal ions in the electrolyte can form a protective layer without causing negative effects on battery performance.

In any embodiment, thickness of a solid electrolyte interphase film (SEI film) formed on a surface of a negative electrode material of the battery is less than 40 nm, and optionally, 10 nm-35 nm, 12 nm-20 nm, or 14 nm-16 nm.

With the first metal oxide layer and the second metal ion adsorption layer of the present invention, the SEI film formed on the surface of the negative electrode can be thinner and more compact. Therefore, cycling performance and rate performance are improved.

In any embodiment, the first metal oxide layer is formed by atomic layer deposition (ALD).

Therefore, the thinner first metal oxide layer that is difficult to make in a common film forming method can be formed, so that the first metal oxide layer can better adsorb the second metal ions.

A second aspect of this application further provides a battery module, including the secondary battery according to the first aspect of this application.

A third aspect of this application provides a battery pack, including the battery module according to the second aspect of this application.

A fourth aspect of this application provides an electric apparatus, including at least one of the secondary battery according to the first aspect of this application, the battery module according to the second aspect of this application, or the battery pack according to the third aspect of this application.

This application can have the following technical effects:

The secondary battery of the present invention can suppress decomposition of electrolytes and improve cycling performance.

In addition, the secondary battery of the present invention can improve kinetic performance and rate performance of batteries.

## BRIEF DESCRIPTION OF DRAWINGS

FIG. 1 is a schematic diagram of a negative electrode plate of a secondary battery according to an embodiment of this application.

FIG. 2 is an electron microscope image of a negative electrode of a secondary battery according to an embodiment of this application, where (a) is a transmission electron microscope (TEM) image of a microscopic structure of the negative electrode, and (b) is an image of electrons on a surface of the negative electrode.

FIG. 3 is a schematic diagram of a secondary battery according to an embodiment of this application.

FIG. 4 is an exploded view of the secondary battery according to the embodiment of this application in FIG. 3.

FIG. 5 is a schematic diagram of a battery module according to an embodiment of this application.

FIG. 6 is a schematic diagram of a battery pack according to an embodiment of this application.

FIG. 7 is an exploded view of the battery pack according to the embodiment of this application in FIG. 6.

FIG. 8 is a schematic diagram of an electric apparatus using a secondary battery as a power source according to an embodiment of this application.

Reference signs are described as follows:

1. battery pack; 2. upper box body; 3. lower box body; 4. battery module; 5. secondary battery; 51. housing; 52. electrode assembly; 53. top cover assembly; 500. negative electrode active substance layer; 501. first metal oxide layer; and 502. second metal ion adsorption layer.

## DESCRIPTION OF EMBODIMENTS

The following specifically discloses embodiments of a secondary battery, a battery module, a battery pack, and an electric apparatus in this application with appropriate reference to detailed descriptions of accompanying drawings. However, unnecessary detailed descriptions may be omitted. For example, detailed descriptions of a well-known matter or overlapping descriptions of an actual identical structure have been omitted. This is to avoid unnecessary cumbersomeness of the following descriptions, to facilitate understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be predicted: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, this is equivalent to disclosure that the parameter is, for example, an integer of 2, 3, 4, 5, 6, 7, 8, 9, 10, 11, 12, and the like.

Unless otherwise specified, all the embodiments and optional embodiments of this application can be mutually combined to form a new technical solution.

Unless otherwise specified, all the technical features and optional technical features of this application can be mutually combined to form a new technical solution.

Unless otherwise specified, all the steps in this application can be performed sequentially or randomly, and optionally performed sequentially. For example, when a method includes steps (a) and (b), this indicates that the method may include steps (a) and (b) performed in sequence, or may include steps (b) and (a) performed in sequence. For example, when the method may further include step (c), this indicates that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

An embodiment of this application provides a secondary battery.

Normally, the secondary battery includes a positive electrode plate, a negative electrode plate, an electrolyte, and a separator. In a battery charging and discharging process, active ions migrate between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

The negative electrode plate of the secondary battery in this application includes a negative electrode current collector and a negative electrode active substance layer, a first metal oxide layer, and a second metal ion adsorption layer that are sequentially arranged on at least one surface of the negative electrode current collector. To be specific, the first metal oxide layer is disposed on a surface of the negative electrode active substance layer opposite a surface facing towards the negative electrode current collector, the first metal oxide layer is located between the negative electrode active substance layer and the second metal ion adsorption layer, and the second metal ion adsorption layer is formed on a surface of the first metal oxide layer opposite a surface facing towards the negative electrode current collector. In addition, the electrolyte contains second metal ions, and the first metal oxide layer is selected from at least one of manganese dioxide, molybdenum oxide, magnesium oxide, aluminum oxide, and phosphorus pentoxide, and optionally, manganese dioxide.

During manufacturing of secondary batteries, carbonate-based solution is reduced and decomposed in formation to form methoxy lithium ($CH_3OLi$) on the surface of negative electrodes. Dilithium carbonate is porous and therefore can be infiltrated by electrolyte, which leads to more reduction and decomposition of electrolyte to form a thick SEI film, reducing kinetic performance of batteries. In the present invention, the first metal oxide layer is disposed on a surface of the negative electrode active substance layer, so that under the strong effect of metal ion adsorption of the first metal oxide layer, the second metal ions are attached to a surface of a negative electrode to form a natural protective layer, which prevents further reduction of electrolytes and co-insertion to make SEI films thinner and more compact, thereby improving cycling performance and rate performance.

An SEI (solid electrolyte interphase) film, namely, solid electrolyte interphase film, refers to a passivation layer that is formed from reactions between the electrode material and an electrolyte at a solid-liquid phase interphase during first charging and discharging of a liquid lithium-ion battery and that covers the surface of an electrode material. Such passivation layer is an interphase layer having the characteristics of a solid electrolyte, and an electronic insulator but an excellent conductor of $Li^+$, and $Li^+$ freely pass through the passivation layer to implement intercalation and deintercalation. The SEI film is porous so that the electrolyte is easy to infiltrate.

In some embodiments, the second metal ions are selected from at least one of $Li^+$, $Cr^{3+}$, $Ca^{2+}$, $K^+$, $Na^+$, $Mo^{6+}$, and $Fe^{2+}$, optionally, at least one of $Li^+$, $Cr^{3+}$, $Mo^{6+}$, and $Fe^{2+}$, and further optionally, at least one of $Li^+$ and $Cr^{3+}$.

Being at least one of the above metal ions, the second metal ions can be easily attached to the surface of the negative electrode to form a natural protective layer, which prevents infiltration, reduction and decomposition of electrolytes, and forming of thick SEI films, and prevents poor battery performance caused by consumption of ions in electrolytes.

With the adsorption effect of the first metal oxide layer, the second metal ions are adsorbed on the surface of the first metal oxide layer. When an SEI film is present, the second metal ions can pass through pores in the SEI film to be directly adsorbed on the surface of the first metal oxide layer, and are adsorbed on the surface of the SEI film at no-pore places of the SEI film. As a result, loose pores of the SEI film are filled and the surface of the electrode plate is covered, so that the first metal oxide layer can play the role of a protective layer to prevent infiltration of the electrolyte, to be specific, prevent further oxidation and decomposition of the electrolyte, by-product generation, and SEI thickening.

Being metal ions with a small ionic radius, and preferably with an ionic radius less than or equal to 0.92 nm, for example, $Li^+$, $Cr^{3+}$, $Ca^{2+}$, $K^+$, $Na^+$, $Mo^{6+}$, and $Fe^{2+}$, the second metal ions can be more easily filled in pores and attached to the surface of the negative electrode to be a better protective layer. The second metal ions are not limited to the above metal ions, provided that they can function as a protective layer.

In some embodiments, thickness of the first metal oxide layer is 0.1 nm-10 nm, and optionally, 0.5 nm-5 nm, 0.7 nm-3 nm, or 0.9 nm-1.5 nm, and may be for example 1 nm.

When the thickness of the first metal oxide layer falls within the above range, lithium ions are allowed to migrate, and the second metal ions can be adsorbed.

In some embodiments, the second metal ions are provided by at least one salt selected from LiCl, $CrCl_3$, CaClz, KCl, NaCl, $MoCl_6$, and FeClz.

Using the above salts to provide the second metal ions can reduce production costs without causing damage to electrodes. The second metal ions are not limited to the above chloride salts, and may be salts such as carbonates and nitrates whose metal ions are easy to release, provided that the salts can provide ions and do not damage to the electrode.

In some embodiments, concentration of the second metal ions in the electrolyte is less than 0.1 mol/L, and optionally, less than 0.05 mol/L, less than 0.01 mol/L, and 0.001 mol/L-0.01 mol/L, and may be for example 0.01 mol/L.

The concentration of the second metal ions in the electrolyte is a concentration after the second metal ion adsorption layer is formed not an initial addition concentration. Under the above concentration, the second metal ions in the electrolyte can form a protective layer without causing negative effects on battery performance. Certainly, the concentration of the second metal ions in the electrolyte may alternatively be less than a limit of detection provided that the second metal ion adsorption layer can be formed.

In some embodiments, thickness of a solid electrolyte interphase film (SEI film) formed on the surface of the negative electrode is less than 40 nm, and optionally, 10 nm-35 nm, 12 nm-20 nm, or 14 nm-16 nm.

In the secondary battery, charging and discharging of the battery are both completed through intercalation and deintercalation of active ions at the negative electrode. Because the active ions must pass through the SEI film covering the negative electrode active material to perform intercalation, the characteristics of the SEI film determine the kinetic performance of the active ions for intercalation and deintercalation and interphase stabilization of the negative electrode active material, and hence the performance of the entire battery, such as cycle life, self-discharge, rated rate, and low-temperature performance of the battery. With the first metal oxide layer and the second metal ion adsorption layer of the present invention, the SEI film of the present invention can be thinner and more compact, thereby improving cycling performance and rate performance.

In some embodiments, the first metal oxide layer is formed by atomic layer deposition (ALD). Certainly, the first metal oxide layer is not limited to this method provided that it can be formed.

Therefore, the thinner first metal oxide layer that is difficult to make in a common film forming method can be formed, so that the first metal oxide layer can better play the foregoing function.

The atomic layer deposition (ALD) method may be carried out, for example, by using an OpAL open loading atomic layer deposition (ALD) device of Oxford of the UK.

In addition, the following describes a secondary battery, a battery module, a battery pack, and an electric apparatus in this application with appropriate reference to the accompanying drawings.

[Positive electrode plate]

The positive electrode plate includes a positive electrode current collector and a positive electrode active substance layer provided on at least one surface of the positive electrode current collector.

For example, the positive electrode current collector has two back-to-back surfaces in a thickness direction thereof, and the positive electrode active substance layer is disposed on either or both of the two back-to-back surfaces of the positive electrode current collector.

In some embodiments, the positive electrode current collector may be a metal foil or a composite current collector. For example, for the metal foil, an aluminum foil may be used. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active substance layer may be made of a well-known positive electrode active substance used for batteries in the art. For example, a positive electrode active substance may include at least one of the following materials: olivine-structured lithium-containing phosphate, lithium transition metal oxide, and respective modified compounds thereof. However, this application is not limited to such materials, and may alternatively use other conventional materials that can be used as positive electrode active substances of batteries. One of these positive electrode active substances may be used alone, or two or more of them may be used in combination. An example of the lithium transition metal oxide may include but is not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), and $LiNi_{0.8}Co_{0.1}Mn_{0.1}O_2$ ($NCM_{811}$ for short)), lithium nickel cobalt aluminum oxide (for example, $LiNi_{0.85}Co_{0.15}Al_{0.05}O_2$), and modified compounds thereof. An example of the olivine-structured lithium-containing phosphate may include but is not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode active substance layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active substance layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following method: dispersing the constituents used for preparing the positive electrode plate, for example, the positive electrode active substance, the conductive agent, the binder, and any other constituents, in a solvent (for example, N-methylpyrrolidone) to obtain a positive electrode slurry, applying the positive electrode slurry onto the positive electrode current collector, and performing processes such as drying and cold-pressing to obtain the positive electrode plate.

[Negative electrode plate]

The negative electrode plate includes a negative electrode current collector, a negative electrode active substance layer, a first metal oxide layer, and a second metal ion adsorption layer. The negative electrode active substance layer, the first metal oxide layer, and the second metal ion adsorption layer are sequentially arranged on at least one surface of the negative electrode current collector.

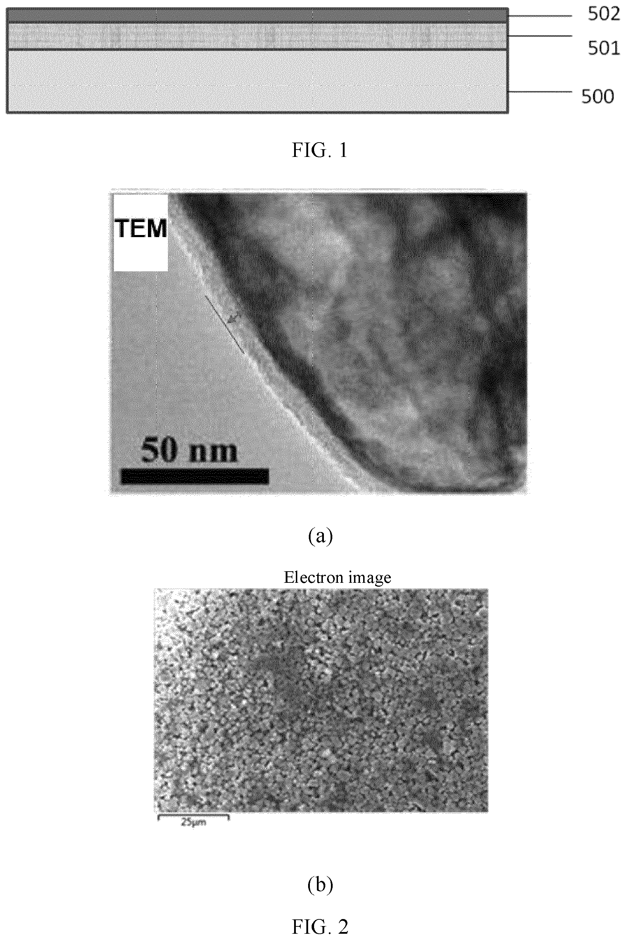

For example, the negative electrode current collector has two back-to-back surfaces in a thickness direction thereof, and the negative electrode active substance layer is disposed on either or both of the two back-to-back surfaces of the negative electrode current collector. The first metal oxide layer is provided on a surface of the negative electrode active substance layer opposite a surface facing towards the negative electrode current collector, and the second metal ion adsorption layer is formed on a surface of the first metal oxide layer opposite a surface facing towards the negative electrode active substance layer. In other words, the first metal oxide layer is located between the negative electrode active substance layer and the second metal ion adsorption layer, and the specific positional relationship can be seen in FIG. 1.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, a negative electrode active substance may be a well-known negative electrode active substance used for batteries in the art. For example, the negative electrode active substance may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to such materials, and may alternatively use other conventional materials that can be used as negative electrode active substances of batteries. One of these negative electrode active substances may be used alone, or two or more of them may be used in combination.

In some embodiments, the negative electrode active substance layer further optionally includes a binder. The binder may be a common binder in the battery field, without particular limitation. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), polyvinylidene fluoride, acryl-based polymer, diene-based polymer, and natural rubber. In particular, polystyrene-acrylate emulsion binders may be used.

In some embodiments, the negative electrode active substance layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, a dispersant may further be used in preparation of the negative electrode active substance layer. The dispersant is used to improve dispersion uniformity and coatability, and may be a common dispersant in the battery field, for example, a polymer dispersant. The polymer dispersant may be polyvinyl alcohol, modified polyvinyl alcohol having functional group other than hydroxyl group, for example, acetyl, sulfo, carboxyl, carbonyl, or amino, polyvinyl alcohol-based resin modified by various salts, anions or kations, or acetal-modified by aldehydes, various (meth)acrylic-based polymers, polymers derived from ethylenically unsaturated hydrocarbons, various cellulose-based resins, or copolymers thereof, but is not limited thereto. One polymer dispersant may be used alone or two or more polymer dispersants may be used together.

In some embodiments, the negative electrode active substance layer further optionally includes other additives, such as a thickener (for example, sodium carboxymethyl cellulose (CMC-Na)).

In some embodiments, the first metal oxide layer may be made of at least one material of manganese dioxide, molybdenum oxide, magnesium oxide, aluminum oxide and phosphorus pentoxide.

In some embodiments, the second metal ions are selected from at least one of $Li^+$, $Cr^{3+}$, $Ca^{2+}$, $K^+$, $Na^+$, $Mo^{6+}$, and $Fe^{2+}$.

In some embodiments, the second metal ions may be provided by at least one salt selected from LiCl, $CrCl_3$, $CaCl_2$, KCl, NaCl, $MoCl_6$, and FeClz.

In some embodiments, the second metal ion adsorption layer is formed by second metal ions entering pores of the SEI film and second metal ions adsorbed on the surface of the SEI film, that is, the second metal ion adsorption layer is formed by second metal ions adsorbed on the surface of the anode plate.

In some embodiments, the negative electrode plate may be prepared in the following method: dispersing the foregoing constituents used for preparing negative electrode plate, for example, the negative electrode active substance, the conductive agent, the binder, and any other constituents in a solvent (for example, deionized water) to obtain a negative electrode active substance layer slurry, applying the negative electrode slurry onto the negative electrode current collector, drying the slurry, applying a first metal oxide on the surface of the collector by using the ALD method, performing formation, and adding a required amount of second metal ion salt through an electrolyte injection hole when a sealing nail is not welded, followed by processes such as aging to form the second metal ion adsorption layer so as to obtain the negative electrode plate.

[Electrolyte]

The electrolyte conducts ions between the positive electrode plate and the negative electrode plate. In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte contains the second metal ions, and concentration of the second metal ions in the electrolyte is less than 0.1 mol/L, and optionally, less than 0.05 mol/L, less than 0.01 mol/L, and 0.001 mol/L-0.01 mol/L, or may be 0.

In some embodiments, the second metal ions are selected from at least one of $Li^+$, $Cr^{3+}$, $Ca^{2+}$, $K^+$, $Na^+$, $Mo^{6+}$ and $Fe^{2+}$, and optionally, at least one of $Li^+$, $Cr^{3+}$, $Mo^{6+}$, and $Fe^{2+}$.

In some embodiments, the second metal ions may be provided by at least one salt selected from LiCl, $CrCl_3$, $CaCl_2$, KCl, NaCl, $MoCl_6$, and FeClz.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of batteries, an additive for improving high-temperature performance or low-temperature performance of batteries.

[Separator]

In some embodiments, the secondary battery further includes a separator. The separator is not limited to any specific type in this application, and may be any commonly known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. A material of the soft pouch may be plastic. In a case of plastic, polypropylene (PP), polybutylene terephthalate (PBT), and polybutylene succinate (PBS) may be enumerated.

FIG. 1 is a schematic diagram of a negative electrode plate of a secondary battery according to an embodiment of this application. FIG. 1 shows only a negative electrode active substance layer 500, a first metal oxide layer 501, and a second metal ion adsorption layer 502 of a negative electrode that are sequentially stacked.

FIG. 2 is an electron microscope image of a negative electrode of a secondary battery according to an embodiment of this application, where (a) is a transmission electron microscope (TEM) image of a microscopic structure of the negative electrode, and (b) is an image of electrons on a surface of the negative electrode. The portion indicated by double arrows in (a) of FIG. 2 is an SEI film on which second ionic metal is adsorbed, and the darker portion is a first metal oxide layer and a negative electrode active substance layer (graphite). (b) of FIG. 2 shows a top view of the SEI film on which the second ionic metal is adsorbed.

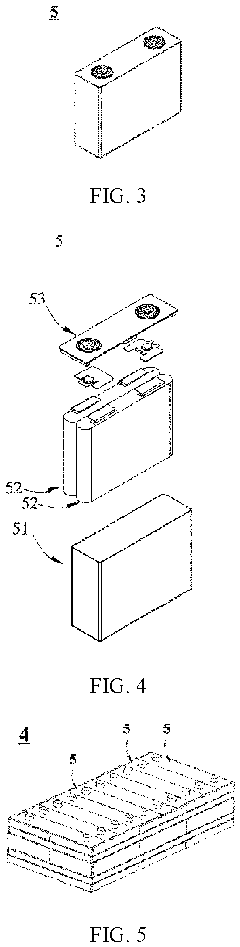

The secondary battery is not limited to a particular shape in this application, and may be cylindrical, rectangular, can-shaped, bag-shaped, or of any other shapes. For example, FIG. 3 shows a secondary battery 5 of a rectangular structure as an example.

In some embodiments, referring to FIG. 4, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

FIG. 5 shows a battery module 4 as an example. With reference to FIG. 5, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery module may be further assembled into a battery pack. The battery pack may include one or more battery modules or a specific quantity of battery modules selected at discretion of a person skilled in the art based on use and capacity of the battery pack.

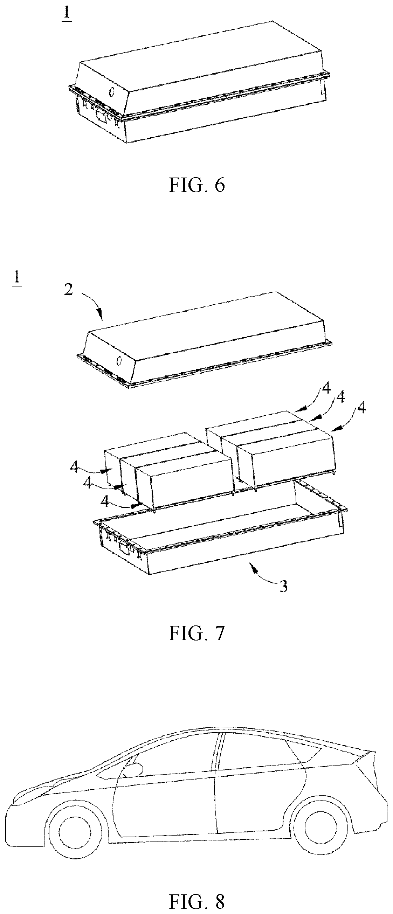

FIG. 6 and FIG. 7 show a battery pack 1 as an example. Referring to FIG. 6 and FIG. 7, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like, but is not limited thereto.

The secondary battery, the battery module, or the battery pack may be selected for the electric apparatus based on requirements for using the electric apparatus.

FIG. 8 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

Examples

The following describes examples in this application. The examples described below are exemplary and only used to explain this application, but cannot be construed as limitations on this application. Examples whose technical solutions or conditions are not specified are made based on technical solutions or conditions described in documents in the art, or made based on the product specification. The reagents or instruments used are all conventional products that can be purchased on the market if no manufacturer is indicated.

Determination and test method

(1) SEI film thickness determination

An ultramicrotome (ultramicrotome) was used to make an ultrathin section of about 50 nm thick of a negative electrode plate, the section was observed using a TEM (transmission electron microscope) to obtain an image shown in FIG. 2, and the image obtained was used to measure an SEI film thickness.

(2) Cycling performance test

The secondary batteries prepared in examples and comparative examples were charged and discharged for the first time at 25°C. The procedure was as follows: After being left standing at 25°C for 30 min, the secondary battery was charged to 4.15 V at a constant current of 0.33C, charged at a constant voltage until the current was ≤ 0.05C, and then discharged to 2.5 V at a constant current of 1C. The discharge capacity C1 in the first cycle was recorded. Then, the battery was continuously charged and discharged at 0.33C1/1C1 and at a voltage of 2.40 V to 4.35 V, and discharge capacities during the cycling processes were recorded. Capacity retention rate after 1000 cycles = (Discharge capacity in the 1000-th cycle/Discharge capacity in the first cycle) × 100%.

(3) Rate performance test

The secondary batteries of examples and comparative examples were left standing at 25°C for 20 min, charged to 4.25 V at a constant current of 0.33C, charged to a current of 0.05C at a constant voltage, and left standing for 30 min, and a charge capacity at this point was recorded as a first charge capacity. The battery was left standing for 30 min, discharged to 2.5 V at a constant current of 4C, and left standing for 30 min, and a discharge capacity at this point was recorded as a capacity at 4C.

(4) Formation of first metal oxide layer

The first metal oxide layers with film thicknesses shown in Table 1 and Table 2 were formed by using an OpAL open loading atomic layer deposition (ALD) device of Oxford of the UK by following its standard operating procedures.

(5) Determination of second metal ion adsorption layer

After the secondary battery was disassembled, the negative electrode plate was taken and placed in an ICP (inductively coupled plasma emission spectrometer) to determine compositions of the electrode plate.

ICP test method: Negative electrode plate powder was scrapped off for digestion, and the powder digested was put into an ICP (model: ICP-AES-OES) tester for test.

Digestion reagent: Different digestion reagents were used for different materials. 1: 1 aqua regia was used for nickel cobalt lithium manganate, inverse aqua regia was used for lithium iron phosphate, concentrated nitric acid was used for graphite material and electrolyte, and concentrated nitric acid + hydrofluoric acid were used for silicon-carbon negative electrode material.

Digestion method: Plate/acid-driven digestion/microwave digestion (at high temperature and high pressure, for example, up to 200°C), where the microwave digestion method was used for carbon-containing positive and negative electrode powder, and the plate digestion method was used for other materials.

Percentages of elements in the electrode plate were calculated according to the following formula to determine presence of the second metal ion adsorption layer.

$$\text{Element percentage (mass fraction w/w\%)} = \text{Element mass}/(\text{sample weight} - \text{current collector mass}) * 100\%.$$

Example 1

1. Preparation of secondary battery

(1) Preparation of positive electrode plate

A positive electrode active material $LiNi_{0.8}Co_{0.8}Mn_{0.1}O_2$ (NCM811), conductive carbon black SP, and a binder polyvinylidene fluoride (PVDF) were well mixed at a mass ratio of 96:1.2:2.8 in a solvent N-methylpyrrolidone (NMP) to obtain a positive electrode slurry. The positive electrode slurry was uniformly applied on a positive electrode current collector aluminum foil, followed by drying, cold-pressing, slitting, and cutting to obtain a positive electrode plate.

(2) Preparation of separator

A 7 $\mu$m polyethylene film was selected as a separator.

(3) Preparation of negative electrode plate

Preparation of negative electrode plate: A negative electrode active substance layer slurry was uniformly applied on a negative electrode current collector copper foil and dried with an oven at 100°C. An anode plate was taken and coated with 1 nm thick manganese oxide (MnOz) in an ALD method, followed by drying, cold-pressing, slitting, and cutting to obtain a negative electrode plate.

(4) Preparation of electrolyte

Ethylene carbonate (EC), diethyl carbonate (DEC), and dimethyl carbonate (DMC) were mixed at a volume ratio of 1:1:1 to obtain an organic solvent, and then a fully dried lithium salt $LiPF_6$ was dissolved in the mixed organic solvent to prepare an electrolyte with a concentration of 1 mol/L.

(5) Preparation of secondary battery

The foregoing positive electrode plate, separator, negative electrode plate were stacked in order so that the separator was located between the positive electrode plate and the negative electrode plate for separation. The stack was wound to prepare a battery cell, and then the battery cell was placed in an outer packaging shell, followed by tab flattening, current collector plate welding, top cover welding, and drying. The electrolyte was injected into the packaging shell, followed by vacuum packaging, standing, and formation. Then, 0.014 mol/L LiCl was added into the electrolyte during electrolyte replenishment so that a concentration of LiCl in the electrolyte of a final battery was 0.01 mol/L ("concentration" in Table 1 and Table 2 is concentration with respect to the final battery), followed by processes such as aging to obtain a secondary battery.

2. Performance test for secondary battery

An SEI film thickness, rate performance, and a capacity retention rate of the secondary battery obtained were determined according to the foregoing content and recorded in Table 1 below.

Examples 2 to 23

Examples 2 to 23 were the same as Example 1 in secondary battery preparation except that reaction conditions were changed as shown in Table 1. SEI film thicknesses, rate performance, and capacity retention rates of the secondary batteries obtained were determined according to the foregoing determination and test methods, and recorded in Table 1 below.

In addition, elemental analysis and inductively coupled plasma atomic emission spectrometry (ICP) analysis were performed in Example 6 to determine amounts of metal elements on the surface of the negative electrode in Example 6, and the results are as follows:

| Element | Percentage (%(w/w)) |
|---------|---------------------|
| Li | 0.668 |
| Ni | 0.0036 |
| Co | 0.0011 |
| Mn | 0.0006 |
| Cr | 0.0008 |

It can be learned that the negative electrode surface contains element Cr added as the second metal ion salt and that the second metal ion adsorption layer is formed on the surface of the negative electrode.

Comparative Examples 1 and 2

Comparative Examples 1 and 2 were the same as Example 1 in secondary battery preparation except that reaction conditions were changed as shown in Table 2. SEI film thicknesses, rate performance, and capacity retention rates of the secondary batteries obtained were determined according to the foregoing determination and test methods, and recorded in Table 2 below.

**Table 1**

| | First metal oxide layer | | Second metal ion salt | | Battery performance | | |
|---|---|---|---|---|---|---|---|
| | Type | Thickness (nm) | Type | Concentration (mol/L) | SEI film thickness (nm) | Rate performance (4C, Ah) | Capacity retention rate (1000 cls) (%) |
| Example 1 | $MnO_2$ | 1 | LiCl | 0.01 | 15 | 34.0 | 94.4 |
| Example 2 | $MnO_2$ | 0.5 | LiCl | 0.01 | 12 | 33.8 | 93.0 |
| Example 3 | $MnO_2$ | 0.7 | LiCl | 0.01 | 13 | 33.9 | 93.2 |
| Example 4 | $MnO_2$ | 0.9 | LiCl | 0.01 | 14 | 34.1 | 94.0 |
| Example 5 | $MnO_2$ | 0.1 | LiCl | 0.01 | 10 | 34.4 | 92.5 |
| Example 6 | $MnO_2$ | 1 | $CrCl_3$ | 0.002 | 14 | 34.1 | 94.5 |
| Example 7 | $MnO_2$ | 1.5 | KCl | 0.005 | 17 | 33.6 | 92.9 |

(continued)

| | First metal oxide layer | | Second metal ion salt | | Battery performance | | |
|---|---|---|---|---|---|---|---|
| | Type | Thickness (nm) | Type | Concentration (mol/L) | SEI film thickness (nm) | Rate performance (4C, Ah) | Capacity retention rate (1000 cls) (%) |
| Example 8 | $MnO_2$ | 3 | LiCl | 0.01 | 20 | 33.4 | 92.3 |
| Example 9 | $MnO_2$ | 5 | NaCl | 0.01 | 28 | 32.6 | 88.0 |
| Example 10 | $MnO_2$ | 6 | LiCl | 0.01 | 29 | 32.4 | 88.2 |
| Example 11 | $MnO_2$ | 7 | $MoCl_6$ | 0.001 | 30 | 32.3 | 88.4 |
| Example 12 | $MnO_2$ | 9 | $FeCl_2$ | 0.05 | 32 | 32.1 | 88.7 |
| Example 13 | $MnO_2$ | 10 | LiCl | 0.01 | 34 | 32.0 | 88.9 |
| Example 14 | $MoO_3$ | 1 | LiCl | 0.01 | 23 | 33.1 | 91.4 |
| Example 15 | $MoO_3$ | 3 | LiCl | 0.01 | 27 | 32.9 | 89.2 |
| Example 16 | $Al_2O_3$ | 1 | LiCl | 0.01 | 25 | 32.6 | 89.5 |
| Example 17 | $P_2O_5$ | 1 | $CaCl_2$ | 0.01 | 29 | 32.5 | 87.5 |
| Example 18 | MgO | 3 | LiCl | 0.07 | 31 | 32.0 | 86.6 |
| Example 19 | $MnO_2$ | 0.1 | LiCl, $CaCl_2$, KCl, and $CrCl_3$ | 0.01 | 11 | 34.5 | 92.8 |
| Example 20 | $MnO_2$ | 0.05 | LiCl | 0.01 | 31 | 32.0 | 87.8 |
| Example 21 | $MnO_2$ | 15 | LiCl | 0.01 | 35 | 31.5 | 87.3 |
| Example 22 | $MnO_2$ | 1 | LiCl | 0.15 | 29 | 32.3 | 88.0 |
| Example 23 | $MoO_3$ | 20 | LiCl | 0.01 | 40 | 31.0 | 85.8 |

**Table 2**

| | First metal oxide layer | | Second metal ion salt | | Battery performance | | |
|---|---|---|---|---|---|---|---|
| | Type | Thickness (nm) | Type | Concentration (mol/L) | SEI film thickness (nm) | Rate performance (4C, Ah) | Capacity retention rate (1000 cls) (%) |
| Comparative Example 1 | - | - | LiCl | 0.01 | 40 | 31.3 | 85.3 |
| Comparative Example 2 | $MnO_2$ | 1 | - | - | 43 | 30.5 | 84.0 |

It can be learned from the foregoing results that both volumetric energy density and cycle life are desirable in Examples 1 to 19. SEI films are thick and capacity retention rates are low in Comparative Example 1 having no first metal oxide layer added and Comparative Example 2 having no second metal ion salt added.

It should be noted that this application is not limited to the foregoing examples. The foregoing embodiments are merely used as examples, and embodiments with substantially identical technical concepts and same functions within the scope of the technical solution in this application all fall within the technical scope of this application. In addition, other manners formed by applying various modifications that can be figured out by a person skilled in the art to the embodiments or by combining some elements of the embodiments without departing from the essence of this application also fall within the scope of this application.

**Claims**

1.  A secondary battery, comprising a negative electrode plate and an electrolyte, wherein

    the negative electrode plate comprises a negative electrode current collector and a negative electrode active substance layer, a first metal oxide layer, and a second metal ion adsorption layer that are sequentially arranged on at least one surface of the negative electrode current collector;
    the first metal oxide is selected from at least one of manganese dioxide, molybdenum oxide, magnesium oxide, aluminum oxide, and phosphorus pentoxide; and
    the electrolyte contains second metal ions.

2.  The secondary battery according to claim 1, wherein
    ionic radius of the second metal ion is less than or equal to 0.92 nm.

3.  The secondary battery according to claim 1 or 2, wherein
    the second metal ions are selected from at least one of $Li^+$, $Cr^{3+}$, $Ca^{2+}$, $K^+$, $Na^+$, $Mo^{6+}$, and $Fe^{2+}$, and optionally, at least one of $Li^+$, $Cr^{3+}$, $Mo^{6+,}$ and $Fe^{2+}$.

4.  The secondary battery according to any one of claims 1 to 3, wherein
    thickness of the first metal oxide layer is 0.1 nm-10 nm, and optionally, 0.5 nm-5 nm.

5.  The secondary battery according to any one of claims 1 to 4, wherein
    the second metal ions are provided by at least one salt selected from LiCl, $CrCl_3$, $CaCl_2$, KCl, NaCl, $MoCl_6$, and FeClz.

6.  The secondary battery according to any one of claims 1 to 5, wherein
    concentration of the second metal ions in the electrolyte is less than 0.1 mol/L, and optionally, less than 0.05 mol/L.

7.  The secondary battery according to any one of claims 1 to 6, wherein
    thickness of a solid electrolyte interphase film (SEI film) formed on a surface of a negative electrode is less than 40 nm, and optionally, 10 nm-35 nm.

8.  The secondary battery according to any one of claims 1 to 7, wherein
    the first metal oxide layer is formed by atomic layer deposition (ALD).

**9.** A battery module, comprising the secondary battery according to any one of claims 1 to 8.

**10.** A battery pack, comprising the battery module according to claim 9.

**11.** An electric apparatus, comprising at least one of the secondary battery according to any one of claims 1 to 8, the battery module according to claim 9, or the battery pack according to claim 10.

FIG. 1

(a)

Electron image

(b)

FIG. 2

FIG. 3

FIG. 4

FIG. 5

1

FIG. 6

1

2

4

4

4

4

4

4

3

FIG. 7

FIG. 8

## INTERNATIONAL SEARCH REPORT

International application No.

**PCT/CN2021/140679**

| A. | CLASSIFICATION OF SUBJECT MATTER |
|---|---|

H01M 10/0525(2010.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 负极, 阳极, 负电极, 电解液, 电解质, 氧化物, 氧化锰, 氧化钼, 氧化镁, 氧化铝, 五氧化二磷, 吸附, 离子, 第二, 钠, 钾, 铁, 钙, 钼, 铬, 锂, MnO2, MoO3, MgO, Al2O3, P2O5, battery, anode, negative, electrolyte, oxide, absorb, metal, ion, cation, second

| C. | DOCUMENTS CONSIDERED TO BE RELEVANT | |
|---|---|---|
| Category* | Citation of document, with indication, where appropriate, of the relevant passages | Relevant to claim No. |
| X | JP 2008305662 A (SONY CORP.) 18 December 2008 (2008-12-18) description, paragraphs 12-79, and figures 1-2 | 1-11 |
| X | WO 2011043243 A1 (SUMITOMO CHEMICAL CO., LTD.) 14 April 2011 (2011-04-14) description, paragraphs 12-79, and figures 1-2 | 1-11 |
| A | JP 2005243323 A (NEC CORP.) 08 September 2005 (2005-09-08) entire document | 1-11 |
| A | CN 113659203 A (HARBIN INSTITUTE OF TECHNOLOGY) 16 November 2021 (2021-11-16) entire document | 1-11 |
| A | CN 111554918 A (TOYOTA MOTOR CO., LTD.) 18 August 2020 (2020-08-18) entire document | 1-11 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 August 2022** | **21 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/140679**

| Patent document cited in search report | | | Publication date (day/month/year) | Patent family member(s) | | | Publication date (day/month/year) |
|---|---|---|---|---|---|---|---|
| JP | 2008305662 | A | 18 December 2008 | None | | | |
| WO | 2011043243 | A1 | 14 April 2011 | JP | 2011081935 | A | 21 April 2011 |
| JP | 2005243323 | A | 08 September 2005 | JP | 4396316 | B2 | 13 January 2010 |
| CN | 113659203 | A | 16 November 2021 | None | | | |
| CN | 111554918 | A | 18 August 2020 | US | 2020259208 | A1 | 13 August 2020 |
| | | | | JP | 2020129481 | A | 27 August 2020 |

Form PCT/ISA/210 (patent family annex) (January 2015)